# EUROPÄISCHE PATENTSCHRIFT

(11) **EP 2 560 858 B1**
(45) Veröffentlichungstag und Bekanntmachung des Hinweises auf die Patenterteilung: **10.06.2015**
(21) Anmeldenummer: 11710762.3
(22) Anmeldetag: 23.03.2011
(51) Int. Cl.: B61D 27/00

(54) **ANORDNUNG ZUR TEMPERIERUNG VON ELEKTRISCHEN KOMPONENTEN IN EINEM FAHRZEUG**
ARRANGEMENT FOR CONTROLLING THE TEMPERATURE OF ELECTRIC COMPONENTS IN A VEHICLE
AGENCEMENT POUR L'ÉQUILIBRAGE EN TEMPÉRATURE DE COMPOSANTS ÉLECTRIQUES DANS UN VÉHICULE

(30) Priorität: 21.04.2010 DE 102010017883
(43) Veröffentlichungstag der Anmeldung: 27.02.2013
(73) Patentinhaber: Bombardier Transportation GmbH, 10785 Berlin (DE)
(72) Erfinder: CHATZICHARALAMBOUS, Konstantin, 14532 Kleinmachnow (DE); SCHROEDER, Thomas, 16761 Hennigsdorf (DE)
(74) Vertreter: Cohausz & Florack
(86) Internationale Anmeldenummer: PCT/EP2011/054441
(87) Internationale Veröffentlichungsnummer: WO 2011/131444

(56) Entgegenhaltungen:
- EP-A1- 0 943 520
- DE-A1- 19 914 565
- DE-A1-102006 032 335
- DE-A1-102007 046 368
- FR-A1- 2 431 384

## Beschreibung

Die Erfindung betrifft eine Anordnung zur Kühlung von elektrischen Komponenten in einem Schienenfahrzeug, mit einem ersten Abteil wenigstens einem als Schaltschrank gebildeten zweiten Abteil zur Aufnahme zu kühlender elektrischer Komponenten und einer Klimatisierungseinrichtung, wobei die Klimatisierungseinrichtung zur Klimatisierung des ersten Abteils und des zweiten Abteils ausgebildet ist, wobei die Klimatisierungseinrichtung dazu ausgebildet ist, aus dem ersten Abteil Abluft abzuführen und zumindest einen Teil der Abluft als Fortluft an die Umgebung des Schienenfahrzeugs abzuführen, wobei die Klimatisierungseinrichtung dazu ausgebildet ist, zumindest einen Abluftanteil der Abluft zur Kühlung des wenigstens einen zweiten Abteils durch das wenigstens eine zweite Abteil zu führen und als Fortluft an die Umgebung des Schienenfahrzeugs abzuführen, wobei die Klimatisierungseinrichtung eine erste Klimatisierungseinheit zur Klimatisierung des ersten Abteils aufweist, wobei die Klimatisierungseinrichtung eine zweite Klimatisierungseinheit zur Klimatisierung des wenigstens einen zweiten Abteils aufweist und wobei die zweite Klimatisierungseinheit eine zweite Lüftereinheit zur Förderung des Abluftanteils durch das wenigstens eine zweite Abteil aufweist. Ferner betrifft die Erfindung ein Schienenfahrzeug mit einer solchen Anordnung. Schließlich betrifft die Erfindung ein Verfahren zur Kühlung von elektrischen Komponenten in einem Schienenfahrzeug mit einem ersten Abteil, wenigstens einem zweiten als Schaltschrank gebildeten Abteil zur Aufnahme der zu kühlenden elektrischen Komponenten, bei dem das erste Abteil und das zweite Abteil klimatisiert werden, wobei aus dem ersten Abteil Abluft abgeführt wird und zumindest ein Teil der Abluft als Fortluft an die Umgebung des Schienenfahrzeugs abgeführt wird, wobei zumindest ein Abluftanteil der Abluft zur Klimatisierung des wenigstens einen zweiten Abteils durch das wenigstens eine zweite Abteil geführt wird und als Fortluft an die Umgebung des Schienenfahrzeugs abgeführt wird, wobei das erste Abteil über eine erste Klimatisierungseinheit der Klimatisierungseinrichtung klimatisiert wird und wobei das wenigstens eine zweite Abteil durch eine zweite Klimatisierungseinheit der Klimatisierungseinrichtung klimatisiert wird, wobei der Abluftanteil durch das wenigstens eine zweite Abteil von einer zweiten Lüftereinheit der zweiten Klimatisierungseinheit gefördert wird. Eine entsprechende Anordnung, ein entsprechendes Schienenfahrzeug und ein entsprechendes Verfahren sind aus der EP 0 943 520 A1 bekannt.

Derartige Anordnungen werden in der Regel zur Kühlung der elektrischen bzw. elektronischen Komponenten in Schaltschränken von Schienenfahrzeugen, insbesondere Triebfahrzeugen, eingesetzt. So befinden sich in Führerständen von Schienenfahrzeugen in der Regel Schaltschränke, deren Bestückung mit Abwärme produzierenden elektrischen bzw. elektronischen Komponenten eine Fremdkühlung erforderlich macht, um die Funktionsfähigkeit der Komponenten im Betrieb sicherzustellen.

Grundsätzlich unterscheidet man zur Kühlung derartiger Schaltschränke die direkte Luftkühlung und die indirekte Luftkühlung. Bei der direkten Luftkühlung ist typischerweise ein separater Ventilator vorgesehen, der dem Schaltschrank und den darin angeordneten Abwärme produzierenden elektrischen bzw. elektronischen Komponenten über eine separate Luftführung (häufig auch als Frischluft bezeichnete) Außenluft von außerhalb des Schienenfahrzeugs zuführt. Bei der indirekten Luftkühlung werden innerhalb des Schaltschranks Wärmetauscher eingesetzt, über welche ein innerer Kühlkreis und ein äußerer Kühlkreis thermisch gekoppelt sind, wobei die im Schaltschrank an den inneren Kühlkreis abgegebene Wärme wird über den Wärmetauscher an den äußeren Kühlkreis übergegeben und über den äußeren Kühlkreis dann abgeführt.

Bei beiden Varianten muss den Schaltschränken ständig über ein eigenes Leitungssystem Luft zugeführt werden, um die Verlustwärme der Bauteile im Schaltschrank sicher abführen zu können. Dies erfordert zudem, dass die separaten Ventilatoren ständig laufen. Neben einer entsprechenden Geräuschemission führen diese Gestaltungen somit auch zu einem erhöhten Energieverbrauch.

Es ist daher die Aufgabe der vorliegenden Erfindung, eine Anordnung, ein Fahrzeug sowie ein Verfahren der eingangs genannten Art zu schaffen, welches die oben genannten Nachteile nicht oder zumindest in geringerem Maße aufweist und mit der bzw. dem die Temperierung der elektrischen Komponenten einfacher und effizienter gestaltet wird.

Die vorliegende Erfindung löst diese Aufgabe ausgehend von einer Anordnung gemäß dem Oberbegriff des Anspruchs 1 durch die im kennzeichnenden Teil des Anspruchs 1 angegebenen Merkmale. Ferner wir die Aufgabe durch ein Schienenfahrzeug gemäß Anspruch 11 gelöst. Die Erfindung löst diese Aufgabe weiterhin ausgehend von einem Verfahren gemäß dem Oberbegriff des Anspruchs 12 durch die im kennzeichnenden Teil des Anspruchs 12 angegebenen Merkmale.

Der vorliegenden Erfindung liegt die technische Lehre zu Grunde, dass man eine einfache und effiziente Temperierung elektrischer bzw. elektronischer Komponenten des Fahrzeugs erzielt, wenn zumindest ein Abluftanteil der Abluft aus dem ersten Abteil zur Klimatisierung des zweiten Abteils durch das zweite Abteil geführt und als Fortluft an die Umgebung des Fahrzeugs abgeführt wird. Mithin kann hierbei das in der Abluft aus dem ersten Abteil noch vorhandene Vermögen zur Wärmeaufnahme genutzt werden, um die Komponenten im zweiten Abteil zu temperieren (in der Regel also zu kühlen). Hierbei wird eine Funktionsintegration der Temperierung dieser Komponenten in die ohnehin vorhandene Klimatisierung des ersten Abteils erzielt, die zu energetischen und apparativen Einsparungen führt. Weiterhin wird erfindungsgemäß zur Temperierung der Komponenten im zweiten Abteil der Teil der Abluft genutzt, der ohnehin das Fahrzeug als Fortluft verlassen soll, sodass ein weiterer Energieaufwand für eine nachfolgende Temperierung bzw. Konditionierung dieses Luftstromes entfällt.

So hat sich unter anderem gezeigt, dass selbst im ungünstigsten Fall mit hohen Außentemperaturen bzw. starker Sonneneinstrahlung auf das Fahrzeug die Erwärmung der Luft im ersten Abteil (dank der vorherigen Konditionierung der Zuluft zum ersten Abteil) nur vergleichsweise gering ausfällt (in der Regel nur wenige Kelvin). Demgemäß liegt zwischen dem durch das zweite Abteil geführten Abluftanteil (der das erste Abteil in der Regel mit einer Temperatur von weniger als 30°C verlässt) und den zu temperierenden Komponenten im zweiten Abteil ein ausreichend hoher Temperaturgradient vor, der in der Regel zu einer guten Wärmeabfuhr aus dem zweiten Abteil führt.

Es sei an dieser Stelle erwähnt, dass es sich bei dem ersten Abteil in der Regel um einen klimatisierten Aufenthaltsraum des Fahrzeugs für Passagiere oder Personal (z. B. den Führerstand) handeln kann. Ebenso kann es sich aber auch um einen Gepäckraum und/oder einen mit weiteren Fahrzeugkomponenten bestückten Raum handeln. Es versteht sich dabei, dass die Klimatisierungseinrichtung natürlich auch zum Beheizen des ersten Abteils (und, in Extremfällen, gegebenenfalls auch des zweiten Abteils) genutzt werden kann.

Gemäß einem ersten Aspekt betrifft die Erfindung daher eine Anordnung zur Temperierung von elektrischen Komponenten in einem Fahrzeug, insbesondere einem Schienenfahrzeug, mit einem ersten Abteil, insbesondere einem Führerstand des Fahrzeugs, wenigstens einem zweiten Abteil, insbesondere einem Schaltschrank, zur Aufnahme zu temperierender elektrischer Komponenten und einer Klimatisierungseinrichtung, wobei die Klimatisierungseinrichtung zur Klimatisierung des ersten Abteils und des zweiten Abteils ausgebildet ist. Die Klimatisierungseinrichtung ist weiterhin dazu ausgebildet, aus dem ersten Abteil Abluft abzuführen und zumindest einen Teil der Abluft als Fortluft an die Umgebung des Fahrzeugs abzuführen. Schließlich ist die Klimatisierungseinrichtung dazu ausgebildet, zumindest einen Abluftanteil der Abluft zur Klimatisierung des wenigstens einen zweiten Abteils durch das wenigstens eine zweite Abteil zu führen und als Fortluft an die Umgebung des Fahrzeugs abzuführen.

Die Klimatisierungseinrichtung umfasst eine erste Klimatisierungseinheit, insbesondere ein herkömmliches Klimagerät, zur Klimatisierung des ersten Abteils. Die erste Klimatisierungseinheit kann dabei so gestaltet sein, dass sie zumindest einen Teil der Strömungsenergie aufbringt, insbesondere aber sogar die gesamte Strömungsenergie aufbringt, die erforderlich ist, den Abluftanteil durch das wenigstens eine zweite Abteil zu fördern. Erfindungsgemäß umfasst die erste Klimatisierungseinheit zu diesem Zwecke eine erste Lüftereinheit zur Förderung des Abluftanteils durch das wenigstens eine zweite Abteil.

Zusätzlich weist die Klimatisierungseinrichtung eine zweite Klimatisierungseinheit zur Klimatisierung des wenigstens einen zweiten Abteils auf, wobei die zweite Klimatisierungseinheit eine zweite Lüftereinheit zur Förderung des Abluftanteils durch das wenigstens eine zweite Abteil aufweist. Auch diese zweite Klimatisierungseinheit kann so gestaltet sein, dass sie zumindest einen Teil der Strömungsenergie aufbringt, insbesondere aber sogar die gesamte Strömungsenergie aufbringt, die erforderlich ist, den Abluftanteil durch das wenigstens eine zweite Abteil zu fördern.

Erfindungsgemäß ist die zweite Lüftereinheit dazu ausgebildet, in einem Notbetrieb bei Ausfall der ersten Lüftereinheit im Wesentlichen den gesamten Volumenstrom zur Klimatisierung des ersten Abteils und des wenigstens einen zweiten Abteils zu erzeugen. Hiermit kann die Ausfallsicherheit des Systems in vorteilhafter Weise erhöht werden.

Die zweite Lüftereinheit kann grundsätzlich an beliebiger geeigneter Stelle im Strömungsweg angeordnet sein. So kann sie beispielsweise in einer Förderrichtung vor dem wenigstens einen zweiten Abteil angeordnet sein, mithin also den Abluftanteil durch das wenigstens eine zweite Abteil hindurch drücken. Im Hinblick auf die Bauteilanordnung besonders günstige Gestaltungen ergeben sich, wenn die zweite Lüftereinheit in einer Förderrichtung nach dem wenigstens einen zweiten Abteil, insbesondere in einem Dachbereich des Fahrzeugs, angeordnet ist. Dabei kann die zweite Lüftereinheit insbesondere nach Art eines Fortlüfters zur Abfuhr des Abluftanteils als Fortluft an die Umgebung des Fahrzeugs ausgebildet sein.

Das erste und zweite Abteil können grundsätzlich in beliebiger räumlicher Beziehung zueinander angeordnet sein. So kann insbesondere gegebenenfalls auch ein größerer Abstand zwischen den beiden Abteilen vorgesehen sein, welcher dann durch eine entsprechende Luftführung (z. B. einen oder mehrere Luftkanäle) überbrückt wird. Vorzugsweise umfasst die Klimatisierungseinrichtung wenigstens eine erste Luftführung zur Führung des Abluftanteils in das wenigstens eine zweite Abteil. Diese erste Luftführung kann beliebig gestaltet sein, beispielsweise lediglich eine einfache Öffnung (bei unmittelbar aneinander angrenzendem ersten und zweiten Abteil) oder aber auch einen oder mehrere Luftkanäle umfassen.

Bei einfach gestalteten Varianten der Erfindung umfasst die erste Luftführung einen Lufteinlass in einer Wandung des wenigstens einen zweiten Abteils, wobei der Lufteinlass insbesondere im Bereich eines Bodens des wenigstens einen zweiten Abteils angeordnet ist. Diese Anordnung im Bodenbereich bringt insbesondere in Kombination mit einer entsprechend höher (beispielsweise im Deckenbereich des Abteils) gelegenen Abfuhrstelle der Luft aus dem zweiten Abteil einen energetischen Vorteil, da die natürliche Konvektion die Strömung unterstützt.

Um die in dem zweiten Abteil angeordneten Komponenten vor Verunreinigungen zu schützen und damit einen dauerhaft guten Wärmeaustausch zu gewährleisten, umfasst die erste Luftführung bevorzugt eine Filtereinrichtung zur Filterung des Abluftanteils. Die Filtereinrichtung ist dabei bevorzugt im Bereich des Lufteinlasses angeordnet, da hierdurch eine kompakte, einfach zu wartende Konfiguration erzielt werden kann.

Die Steuerung der Klimatisierungseinrichtung kann grundsätzlich nach beliebigen Kriterien erfolgen. Insbesondere können einander gegebenenfalls mehrere Regelkreise überlagert sein. So kann beispielsweise ein Regelkreis vorgesehen sein, die die Temperatur in dem ersten Abteil auf eine gewünschte Solltemperatur regelt. Insbesondere für den Fall, dass das erste und zweite Abteil unmittelbar aneinander angrenzen, wird hierdurch bereits der Teil der Abwärme der in dem zweiten Abteil angeordneten Komponenten abgeführt, der das zweite Abteil über den Wärmedurchgang durch gemeinsame Wände verlässt.

Bei bevorzugten Varianten der Erfindung ist eine Temperaturregelung in dem wenigstens einen zweiten Abteil vorgesehen. Hierzu umfasst die Klimatisierungseinrichtung bevorzugt eine Steuereinrichtung und eine mit der Steuereinrichtung verbundene Sensoreinrichtung, wobei die Sensoreinrichtung eine erste Messgröße erfasst, die für eine im Bereich der elektrischen Komponenten in dem zweiten Abteil vorherrschende Temperatur repräsentativ ist. Die Sensoreinrichtung gibt einen aktuellen Wert der erste Messgröße an die Steuereinrichtung weiter, wobei die Klimatisierungseinrichtung dazu ausgebildet ist, einen Volumenstrom des ersten Abluftanteils gesteuert durch die Steuereinrichtung in Abhängigkeit von dem aktuellen Wert der ersten Messgröße zu variieren.

Vorzugsweise ist die Steuereinrichtung dazu ausgebildet, den aktuellen Wert der ersten Messgröße mit einem Grenzwert zu vergleichen, während die Klimatisierungseinrichtung dazu ausgebildet ist, gesteuert durch die Steuereinrichtung den Volumenstrom des ersten Abluftanteils bei Überschreitung des Grenzwerts zu erhöhen, um unerwünscht hohen Temperaturen in dem zweiten Abteil wirksam entgegenzuwirken.

Die Einstellung des Volumenstroms kann stufenlos erfolgen. Bei besonders einfach gestalteten Varianten sind jedoch zumindest abschnittsweise diskrete Leistungsstufen vorgesehen. So ist die Klimatisierungseinrichtung vorzugsweise dazu ausgebildet, bei Unterschreitung des Grenzwerts in einem Grundlastbetrieb einen im Wesentlichen konstanten ersten Volumenstrom des ersten Abluftanteils einzustellen und bei Überschreitung des Grenzwerts in einem Lüftungsbetrieb einen im Wesentlichen konstanten zweiten Volumenstrom des ersten Abluftanteils einzustellen.

Je nach Höhe der abzuführen Wärmemenge kann der erste Volumenstrom entsprechend groß ausfallen. Bei besonders günstigen Varianten der Erfindung mit einer vorteilhaft hohen Kühlleistung beträgt der erste Volumenstrom 30 bis 140 m³/h, vorzugsweise 50 bis 120 m³/h, weiter vorzugsweise 60 bis 100 m³/h. Zusätzlich oder alternativ beträgt der zweite Volumenstrom 300 bis 600 m³/h, vorzugsweise 350 bis 550 m³/h, weiter vorzugsweise 400 bis 500 m³/h. Hiermit lassen sich energetisch besonders günstige Varianten realisieren.

Die Variation des Volumenstroms lässt sich grundsätzlich auf beliebige geeignete Weise realisieren. So können beispielsweise mehrere Lüfterstufen vorgesehen sein, die je nach Bedarf zugeschaltet bzw. abgeschaltet werden. Vorzugsweise umfasst die Klimatisierungseinrichtung wenigstens eine durch die Steuereinrichtung gesteuerte Lüftereinheit zur Förderung des Abluftanteils durch das wenigstens eine zweite Abteil, wobei die Lüftereinheit bevorzugt dazu ausgebildet ist, zur Variation des Volumenstromes des ersten Abluftanteils ihre Drehzahl zu ändern. Zusätzlich oder alternativ kann die Lüftereinheit in einer Förderrichtung nach dem wenigstens einen zweiten Abteil, insbesondere in einem Dachbereich des Fahrzeugs, angeordnet sein, da hiermit, wie bereits erwähnt, unter anderem eine besonders Platz sparende und energetisch günstige Gestaltung erzielt werden kann. Auch hier kann die Lüftereinheit wiederum nach Art eines einfachen Fortlüfters zur Abfuhr des Abluftanteils als Fortluft an die Umgebung des Fahrzeugs ausgebildet sein.

Die vorliegende Erfindung kann im Zusammenhang mit der Temperierung der Komponenten in einem einzigen zweiten Abteil eingesetzt werden. Bei bevorzugten Varianten der Erfindung sind jedoch mehrere zweite Abteile (mit entsprechend zu temperierenden Komponenten) vorgesehen. Vorzugsweise ist somit ein weiteres zweites Abteil vorgesehen, wobei die Klimatisierungseinrichtung dann zur Klimatisierung des weiteren zweiten Abteils ausgebildet ist. Die Klimatisierungseinrichtung ist dazu ausgebildet, einen ersten Teil des Abluftanteils durch das wenigstens eine zweite Abteil zu führen und einen zweiten Teil des Abluftanteils durch das weitere zweite Abteil zu führen. Die Klimatisierungseinrichtung kann dabei wenigstens eine Lüftereinheit zur Förderung des Abluftanteils aufweisen, die insbesondere in einer Förderrichtung nach den zweiten Abteilen angeordnet und mit den zweiten Abteilen über jeweils eine zweite Luftführung verbunden ist.

Wie bereits erwähnt, können das erste und das zweite Abteil in beliebiger räumlicher Beziehung zueinander stehen. Wegen der kurzen Strömungswege und der damit einhergehenden energetischen Vorteile (geringe Druckverluste) ist das wenigstens eine zweite Abteil dem ersten Abteil bevorzugt unmittelbar benachbart angeordnet. Hierbei kann insbesondere vorgesehen sein, dass das wenigstens eine zweite Abteil insbesondere des ersten Abteils angeordnet ist.

Die vorliegende Erfindung betrifft weiterhin ein Fahrzeug, insbesondere ein Schienenfahrzeug, mit einer erfindungsgemäßen Anordnung zur Temperierung elektrische Komponenten.

Weiterhin betrifft die vorliegende Erfindung ein Verfahren zur Temperierung von elektrischen Komponenten in einem Fahrzeug, insbesondere einem Schienenfahrzeug, mit einem ersten Abteil, insbesondere einem Führerstand des Fahrzeugs, und wenigstens einem zweiten Abteil, insbesondere einem Schaltschrank, zur Aufnahme der elektrischen Komponenten, bei dem das erste Abteil und das zweite Abteil klimatisiert werden, wobei aus dem ersten Abteil Abluft abgeführt wird und zumindest ein Teil der Abluft als Fortluft an die Umgebung des Fahrzeugs abgeführt wird. Zumindest ein Abluftanteil der Abluft zur Klimatisierung des wenigstens einen zweiten Abteils wird durch das wenigstens eine zweite Abteil geführt und als Fortluft an die Umgebung des Fahrzeugs abgeführt.

Hiermit lassen sich jeweils die oben beschriebenen Vorteile und Varianten in demselben Maße realisieren, sodass zur Vermeidung von Wiederholungen auf die obigen Ausführungen verwiesen wird.

Weitere bevorzugte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt. Es zeigen:
- Figur 1: eine stark schematisierte Ansicht einer bevorzugten Ausführungsform des erfindungsgemäßen Fahrzeugs mit einer bevorzugten Ausführungsform der erfindungsgemäßen Anordnung zur Temperierung von elektrischen Komponenten, mit der eine bevorzugte Ausführungsform des erfindungsgemäßen Verfahrens zur Temperierung von elektrischen Komponenten durchgeführt werden kann;
- Figur 2: eine schematische perspektivische Ansicht eines Teils des Fahrzeugs aus Figur 1.

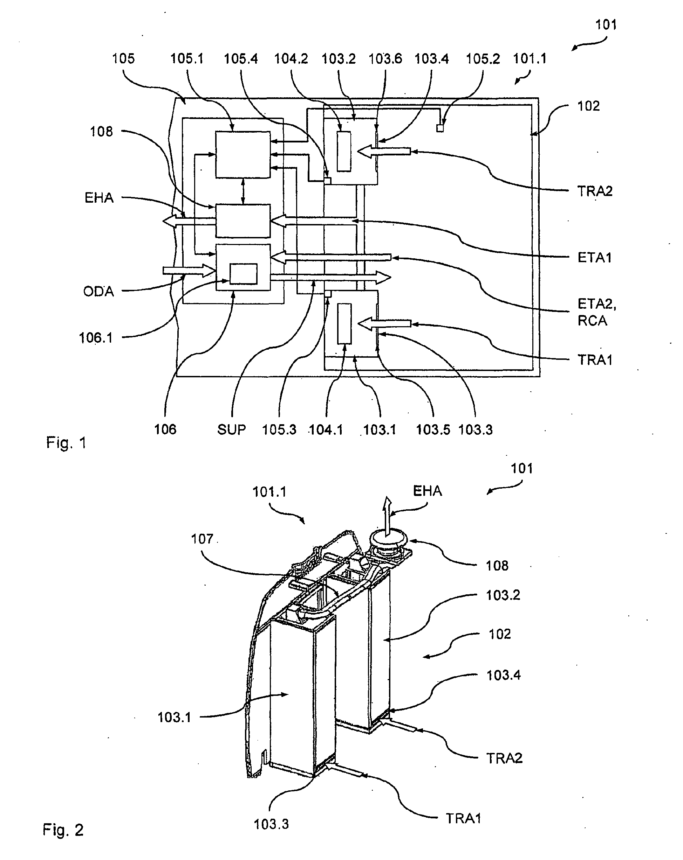

Im Folgenden wird unter Bezugnahme auf die Figuren 1 und 2 ein bevorzugtes Ausführungsbeispiel des erfindungsgemäßen Fahrzeugs in Form eines Schienenfahrzeugs 101 beschrieben, welche seine bevorzugte Ausführungsform der erfindungsgemäßen Anordnung 101.1 zur Temperierung von elektrischen Komponenten. Bei dem Schienenfahrzeug 101 handelt es sich um ein Triebfahrzeug, welches an seinem einen Ende ein erstes Abteil in Form eines Führerstandes 102 für den Fahrzeugführer aufweist. In dem ersten Abteil 102 sind zwei zweite Abteile in Form eines ersten Schaltschrankes 103.1 und eines zweiten Schaltschrankes 103.2 angeordnet.

In den Schaltschränken 103.1 und 103.2 sind elektrische bzw. elektronische Komponenten 104.1, 104.2 des Fahrzeugs 101 angeordnet, die im Betrieb des Fahrzeugs 101 zum Teil erhebliche Verlustwärme bzw. Abwärme produzieren. Diese Abwärme muss aus dem jeweiligen Schaltschrank abgeführt werden, um eine Überhitzung der Komponenten 104.1, 104.2 zu vermeiden und somit deren Funktionsfähigkeit zu gewährleisten.

Neben der Temperierung der elektrischen Komponenten 104.1, 104.2 ist es natürlich auch erforderlich, den Führerstand 102 entsprechend zu klimatisieren, um unabhängig von den vorherrschenden Witterungsbedingungen (starker winterlicher Frost bis hin zur starken sommerlichen Sonneneinstrahlung) ein für den Fahrzeugführer akzeptables Raumklima herzustellen.

Zu diesem Zweck umfasst das Fahrzeug 101 eine Klimatisierungseinrichtung 105, welche in der nachfolgend noch näher erläuterten Weise sowohl den Führerstand 102 als auch die beiden Schaltschränke 103.1, 103.2 klimatisiert.

Zur Klimatisierung umfasst die Klimatisierungseinrichtung 105 eine erste Klimatisierungseinheit in Form eines Klimageräts 106, welches gesteuert durch eine Steuereinrichtung 105.1 der Klimatisierungseinrichtung 105 Frischluft bzw. Außenluft ODA aus der Umgebung des Fahrzeugs 101 ansaugt. Das Klimagerät 106 mischt der Außenluft ODA gegebenenfalls Umluft RCA aus dem Führerstand 102 zu, konditioniert dieses Gemisch entsprechend den Vorgaben der Steuereinrichtung 105.1 und führt das konditionierte Luftgemisch mittels einer ersten Lüftereinheit 106.1 als Zuluft SUP dem Führerstand 102 zu.

Die Konditionierung der Zuluft SUP erfolgt in Abhängigkeit von den Signalen einer Sensoreinrichtung 105.2. Die Sensoreinrichtung 105.2 erfasst zumindest die aktuelle Temperatur TF im Führerstand 102, gegebenenfalls aber auch weitere das Raumklima im Führerstand 102 charakterisierende Größen (beispielsweise CO₂-Konzentration, Luftfeuchtigkeit etc.), und übermittelt entsprechende Signale an die Steuereinrichtung 105.1.

Die Klimatisierungseinrichtung 105 befördert zumindest einen ersten Abluftanteil ETA1 über die beiden Schaltschränke 103.1, 103.2 aus dem Führerstand 102 heraus und führt diesen ersten Abluftanteil dann als Fortluft EHA aus dem Fahrzeug 101 heraus in dessen Umgebung ab. Je nach den aktuellen Anforderungen der Klimatisierung fördert die Klimatisierungseinrichtung 105 zudem, wie bereits erwähnt, gegebenenfalls einen zweiten Abluftanteil ETA2 aus dem Führerstand 102 heraus und führt diesen als Umluft RCA dem Klimagerät 106 zu.

Der erste Abluftanteil ETA1 wird in einen ersten Teilstrom TRA1 und einen zweiten Teilstrom TRA2 aufgeteilt, wobei der erste Teilstrom TRA1 dem ersten Schaltschrank 103.1 über einen ersten Einlass 103.3 und der zweite Teilstrom TRA2 dem zweiten Schaltschrank 103.2 über einen zweiten Einlass 103.4 zugeführt wird. Die Aufteilung des ersten Abluftanteils ETA1 erfolgt entsprechend der aus dem jeweiligen Schaltschrank 103.1, 103.2 abzuführenden Wärmeleistung.

Diese Aufteilung kann anhand der Nennverlustleistung der jeweiligen Komponenten im Wesentlichen einmalig vorgegeben sein (beispielsweise durch die aufgrund baulicher Gegebenheiten vorhandenen Strömungsquerschnitte im Laufe des jeweiligen Teilstroms). Eine solche Variante ist im vorliegenden Beispiel realisiert, bei der eine Aufteilung in zwei im Wesentlichen gleich große Teilströme TRA1 = TRA2 erfolgt.

Es versteht sich jedoch, dass die Aufteilung bei anderen Varianten der Erfindung auch variabel in Abhängigkeit von der aktuell erforderlichen Wärmeabfuhrleistung im jeweiligen Schaltschrank erfolgen kann. So können hierzu sowohl eine oder mehrere veränderliche Steuerklappen oder dergleichen vorgesehen sein. Zusätzlich oder alternativ können die beiden Teilströme über separate Lüftereinrichtungen mit veränderlichem Fördervolumen eingestellt werden.

Die Führung der Teilströme TRA1 und TRA2 wird im Folgenden beispielhaft anhand des ersten Teilstroms TRA1 durch den ersten Schaltschrank 103.1 beschrieben. Es versteht sich, dass diese Ausführungen gleichermaßen auch für die Führung des zweiten Teilstroms TRA2 durch den zweiten Schaltschrank 103.2 gelten.

Der erste Teilstrom TRA1 wird über den ersten Einlass 103.3 einer ersten Luftführung in den ersten Schaltschrank 103.1 geführt. Es sei an dieser Stelle angemerkt, dass die erste Luftführung wegen der unmittelbar benachbarten Anordnung des ersten Abteils (Führerstand 102) und des zweiten Abteils (erster Schaltschrank 103.1) im vorliegenden Beispiel im Wesentlichen aus den ersten Einlass 103.3 besteht. Es versteht sich jedoch, dass bei anderen Varianten der Erfindung mit einem größeren Abstand zwischen den beiden Abteilen auch eine längere Luftführung vorgesehen sein kann, wie beispielsweise durch entsprechend gestaltete Luftkanäle oder dergleichen realisiert ist.

Der erste Einlass 103.3 befindet sich im Bodenbereich des ersten Schaltschrankes 103.1, wobei im Bereich des ersten Einlasses 103.3 ein erster Filter 103.5 vorgesehen ist. Dieser erste Filter 103.5 dient im Wesentlichen dazu, Staub- bzw. Schmutzpartikel aus dem ersten Teilstrom TRA1 herauszufiltern und so eine Verschmutzung der elektrischen Komponenten 104.1 zu vermeiden (welche andernfalls sowohl den Wärmeübergang bzw. die Wärmeabfuhr als auch gegebenenfalls unmittelbar die Funktionsfähigkeit der Komponenten beeinträchtigen könnte).

Der erste Teilstrom TRA1 wird durch den ersten Schaltschrank 103.1 hindurch an den Komponenten 104.1 vorbeigeführt, um deren Abwärme aufzunehmen und abzuführen. Es versteht sich, dass bei bestimmten Varianten der Erfindung vorgesehen sein kann, dass der erste Teilstrom TRA1 zumindest einen Teil der zu temperierenden Komponenten 104.1 nicht direkt kontaktiert, sondern die Wärme mit separaten Kühlkörpern und/oder Kühlkreisläufen für diese Komponenten austauscht.

Nachdem der erste Teilstrom TRA1 die zu temperierenden Komponenten 104.1 passiert hat, wird er im Deckenbereich über eine zweite Luftführung 107 aus dem Schaltschrank 103.1 herausgeführt. Diese Gestaltung mit dem Einlass 103.3 im Bodenbereich und dem Auslass zur zweiten Luftführung 107 im Deckenbereich hat den energetischen Vorteil, dass die natürliche Konvention die Förderung des Teilstroms TRA1 unterstützt.

Der aus dem ersten Schaltschrank 103.1 herausgeführte erste Teilstrom TRA1 wird in der zweiten Luftführung 107 mit dem (in analoger Weise aus dem zweiten Schaltschrank 103.2 herausgeführten) zweiten Teilstrom TRA2 zu dem ersten Abluftanteil ETA1 vereinigt und einer zweiten Klimatisierungseinheit in Form einer zweiten Lüftereinheit 108 zugeführt. Die zweite Lüftereinheit 108 ist als im Dachbereich des Fahrzeugs 101 angeordneter axialer Fortlüfter gestaltet und führt den ersten Abluftanteils ETA1 dann als Fortluft EHA der Umgebung des Fahrzeugs 101 zu.

Mit dieser Gestaltung wird in vorteilhafter Weise das in der (in die Teilströme TRA1 und TRA2 aufgeteilten) Abluft ETA1 aus dem Führerstand 102 noch vorhandene Vermögen zur Wärmeaufnahme genutzt, um die Komponenten 104.1, 104.2 im jeweiligen Schaltschrank 103.1, 103.2 zu temperieren. Diese Funktionsintegration der Temperierung dieser Komponenten 104.1, 104.2 in die ohnehin vorhandene Klimatisierung des Führerstands 102 führt zu energetischen und apparativen Einsparungen. So ist insbesondere zum einen kein separater Kühlkreis mehr für den jeweiligen Schaltschrank 103.1, 103.2 erforderlich. Weiterhin wird erfindungsgemäß zur Temperierung der Komponenten 104.1, 104.2 im jeweiligen Schaltschrank 103.1, 103.2 der Teil der Abluft ETA aus dem Führerstand 102 genutzt, der ohnehin das Fahrzeug 101 als Fortluft EHA verlassen soll, sodass ein weiterer Energieaufwand für eine nachfolgende Temperierung bzw. Konditionierung dieses Luftstromes entfällt.

Selbst im ungünstigsten Fall mit hohen Außentemperaturen bzw. starker Sonneneinstrahlung auf das Fahrzeug 101 fällt die Erwärmung der Luft im Führerstand 102 (dank der vorherigen gesteuerten Konditionierung der Zuluft SUP) nur vergleichsweise gering aus (in der Regel nur wenige Kelvin). Demgemäß liegt zwischen dem durch den jeweiligen Schaltschrank 103.1, 103.2 geführten Abluftanteil TRA1, TRA2 (der das erste Abteil in der Regel mit einer Temperatur von weniger als 30°C verlässt) und den zu temperierenden Komponenten 104.1, 104.2 im zweiten Abteil ein ausreichend hoher Temperaturgradient vor, der in der Regel zu einer guten Wärmeabfuhr aus dem jeweiligen Schaltschrank 103.1, 103.2 führt.

Zur Klimatisierung des Führerstands 102 und der Schaltschränke 103.1, 103.2 realisiert die Steuereinrichtung 105.1 zwei einander überlagerten Regelkreise. So ist zum einen der bereits erwähnte erste Regelkreis vorgesehen, der unter anderem die Temperatur in dem Führerstand 102 auf eine gewünschte Solltemperatur regelt.

Weiterhin ist ein zweiter Regelkreis vorgesehen, über den eine Temperaturregelung in den beiden Schaltschränken 103.1, 103.2 erfolgt. Es versteht sich jedoch, dass bei anderen Varianten der Erfindung über die Temperaturregelung hinaus natürlich auch eine Klimatisierung der Schaltschränke 103.1, 103.2 in Abhängigkeit von weiteren klimatischen Größen (Luftfeuchtigkeit etc.) erfolgen kann, welchen Einfluss auf die Funktionsfähigkeit der Komponenten 104.1, 104.2 haben.

Im vorliegenden Beispiel ist für den zweiten Regelkreis in dem jeweiligen Schaltschrank 103.1, 103.2 eine mit der Steuereinrichtung 105.1 verbundene Sensoreinrichtung 105.3 bzw. 105.4 vorgesehen, die jeweils eine erste Messgröße erfasst, die für eine im Bereich der elektrischen Komponenten 104.1, 104.2 in dem zweiten Abteil vorherrschende Temperatur repräsentativ ist. Die jeweilige Sensoreinrichtung 105.3 bzw. 105.4 gibt einen aktuellen Wert T1 bzw. T2 der ersten Messgröße an die Steuereinrichtung 105.1 weiter

Die Steuereinrichtung 105.1 vergleicht jeweils den aktuellen Wert T1 bzw. T2 der ersten Messgröße mit einem Grenzwert TG. Überschreitet einer der Werte T1, T2 den Grenzwert (d. h. es gilt T1 > TG oder T2 > TG), so wird der zweite Lüfter 108 sowie gegebenenfalls der erste Lüfter 106.1 in einem so genannten Lüftungsbetrieb so angesteuert, dass der Volumenstrom des ersten Abluftanteils ETA1 erhöht wird, um derart unerwünscht hohen Temperaturen in den Schaltschränken 103.1, 103.2 wirksam entgegenzuwirken.

Die Einstellung des Volumenstroms des Abluftanteils ETA1 kann stufenlos erfolgen. Im vorliegenden Beispiel ist jedoch eine gestufte Variation vorgesehen. So ist in einem Grundlastbetrieb, bei dem der Grenzwert TG in beiden Schaltschränken 103.1, 103.2 eingehalten wird (d. h. es gilt T1 ≤ TG und T2 ≤ TG), ein im Wesentlichen konstanter erster Volumenstrom des ersten Abluftanteils ETA1 eingestellt, der bei 60 m³/h liegt.

Wird der Grenzwert TG in einem der Schaltschränke 103.1, 103.2 überschritten (d. h. es gilt T1 > TG oder T2 > TG), so wird in den Lüftungsbetrieb umgeschaltet, in dem ein im Wesentlichen konstanter zweite Volumenstrom im ersten Abluftanteils ETA1 eingestellt wird, die bei 400 m³/h liegt.

Im vorliegenden Beispiel geschieht dies dadurch, dass der zweite Lüfter 108 zwei Drehzahlstufen aufweist, zwischen denen (gesteuert durch die Steuereinrichtung 105.1) umgeschaltet werden kann. Es versteht sich jedoch, dass bei anderen Varianten der Erfindung auch eine andere Art der Variation der Volumenströme realisiert sein kann.

Im vorliegenden Beispiel hat der zweite Regelkreis (Temperaturregelung in den Schaltschränken 103.1, 103.2) Vorrang gegenüber dem ersten Regelkreis (Klimatisierung des Führerstands 102). Mithin wird die Klimatisierungseinrichtung 105 also unabhängig von den aktuellen Anforderungen für die Klimatisierung des Führerstands 102 stets entsprechend den Anforderungen zur Temperaturregelung in den Schaltschränken 103.1, 103.2 betrieben. Hiermit wird erreicht, dass in den Schaltschränken 103.1, 103.2 stets die für die Funktionsfähigkeit der Komponenten 104.1, 104.2 erforderlichen klimatischen Bedingungen herrschen.

Der erste Lüfter 106.1 und der zweite Lüfter 108 sind im vorliegenden Beispiel so gestaltet, dass sie jeweils alleine die gesamte Strömungsenergie aufbringen können, die erforderlich ist, den ersten Abluftanteil ETA1 durch die Schaltschränke 103.1, 103.2 zu fördern. Dies hat den Vorteil, dass die notwendige Temperierung der Komponenten 104.1, 104.2 auch bei Ausfall eines der beiden Lüfter 106.1, 108 in einem Notbetrieb gewährleistet werden kann. Ebenso kann hiermit natürlich auch die Klimatisierung des Führerstandes 102 in dem Notbetrieb gewährleistet werden. Es versteht sich in diesem Zusammenhang, dass bei anderen Varianten der Erfindung gegebenenfalls der zweite Lüfter auch fehlen kann, mithin also die Strömungsenergie für den ersten Abluftanteil ETA1 ausschließlich durch das Klimagerät aufgebracht wird.

Die vorliegende Erfindung wurde vorstehend ausschließlich anhand von Beispielen für Schienenfahrzeuge beschrieben. Es versteht sich weiterhin, dass die Erfindung auch in Verbindung mit beliebigen anderen Fahrzeugen zum Einsätz kommen kann.

## Patentansprüche

1. Anordnung zur Kühlung von elektrischen Komponenten in einem Schienenfahrzeug, mit
- einem ersten Abteil (102)
- wenigstens einem als Schaltschrank gebildeten zweiten Abteil (103.1, 103.2) zur Aufnahme zu kühlender elektrischer Komponenten (104.1, 104.2) und
- einer Klimatisierungseinrichtung (105), wobei
- die Klimatisierungseinrichtung (105) zur Klimatisierung des ersten Abteils (102) und des zweiten Abteils (103.1, 103.2) ausgebildet ist, wobei
- die Klimatisierungseinrichtung (105) dazu ausgebildet ist, aus dem ersten Abteil (102) Abluft abzuführen und zumindest einen Teil der Abluft als Fortluft an die Umgebung des Schienenfahrzeugs abzuführen, wobei
- die Klimatisierungseinrichtung (105) dazu ausgebildet ist, zumindest einen Abluftanteil der Abluft zur Kühlung des wenigstens einen zweiten Abteils (103.1, 103.2) durch das wenigstens eine zweite Abteil (103.1, 103.2) zu führen und als Fortluft an die Umgebung des Schienenfahrzeugs abzuführen, wobei
- die Klimatisierungseinrichtung (105) eine erste Klimatisierungseinheit (106) zur Klimatisierung des ersten Abteils (102) aufweist,
**dadurch gekennzeichnet, dass**
- die erste Klimatisierungseinheit (106) eine erste Lüftereinheit (106.1) zur Förderung des Abluftanteils durch das wenigstens eine zweite Abteil (103.1, 103.2) aufweist und
- die Klimatisierungseinrichtung (105) eine zweite Klimatisierungseinheit (108) zur Klimatisierung des wenigstens einen zweiten Abteils (103.1, 103.2) aufweist und wobei
- die zweite Klimatisierungseinheit eine zweite Lüftereinheit (108) zur Förderung des Abluftanteils durch das wenigstens eine zweite Abteil (103.1, 103.2) aufweist,
- die zweite Lüftereinheit (108) dazu ausgebildet ist, in einem Notbetrieb bei Ausfall der ersten Lüftereinheit (106.1) den gesamten Volumenstrom zur Klimatisierung des ersten Abteils (102) und des wenigstens einen zweiten Abteils (103.1, 103.2) zu erzeugen.

2. Anordnung nach Anspruch 1, **dadurch gekennzeichnet, dass**
- die zweite Lüftereinheit (108) in einer Förderrichtung nach dem wenigstens einen zweiten Abteil (103.1, 103.2) angeordnet ist, wobei
- die zweite Lüftereinheit (108) nach Art eines Fortlüfters zur Abfuhr des Abluftanteils als Fortluft an die Umgebung des Schienenfahrzeugs ausgebildet ist.

3. Anordnung nach einem der vorhergehenden Ansprüche, **dadurch gekennzeichnet, dass**
- die Klimatisierungseinrichtung (105) wenigstens eine erste Luftführung (103.3, 103.4) zur Führung des Abluftanteils in das wenigstens eine zweite Abteil (103.1, 103.2) aufweist, wobei
- die erste Luftführung einen Lufteinlass (103.3, 103.4) in einer Wandung des wenigstens einen zweiten Abteils (103.1, 103.2) umfasst.

4. Anordnung nach Anspruch 3, **dadurch gekennzeichnet, dass**
- die erste Luftführung eine Filtereinrichtung (103.5, 103.6) zur Filterung des Abluftanteils umfasst, wobei
- die Filtereinrichtung (103.5, 103.6) im Bereich des Lufteinlasses (103.3, 103.4) angeordnet ist.

5. Anordnung nach einem der vorhergehenden Ansprüche, **dadurch gekennzeichnet, dass**
- die Klimatisierungseinrichtung (105) eine Steuereinrichtung (105.1) und eine mit der Steuereinrichtung (105.1) verbundene Sensoreinrichtung (105.3, 105.4) aufweist, wobei
- die Sensoreinrichtung (105.3, 105.4) eine erste Messgröße erfasst, die für eine im Bereich der elektrischen Komponenten (104.1, 104.2) in dem zweiten Abteil (103.1, 103.2) vorherrschende Temperatur repräsentativ ist,
- die Sensoreinrichtung (105.3, 105.4) einen aktuellen Wert der erste Messgröße an die Steuereinrichtung (105.1) weitergibt und
- die Klimatisierungseinrichtung (105) dazu ausgebildet ist, einen Volumenstrom des ersten Abluftanteils gesteuert durch die Steuereinrichtung (105.1) in Abhängigkeit von dem aktuellen Wert der ersten Messgröße zu variieren.

6. Anordnung nach Anspruch 5, **dadurch gekennzeichnet, dass**
- die Steuereinrichtung (105.1) dazu ausgebildet ist, den aktuellen Wert der ersten Messgröße mit einem Grenzwert zu vergleichen und
- die Klimatisierungseinrichtung (105) dazu ausgebildet ist, gesteuert durch die Steuereinrichtung (105.1) den Volumenstrom des ersten Abluftanteils bei Überschreitung des Grenzwerts zu erhöhen, wobei
- die Klimatisierungseinrichtung (105) dazu ausgebildet ist, bei Unterschreitung des Grenzwerts in einem Grundlastbetrieb einen konstanten ersten Volumenstrom des ersten Abluftanteils einzustellen und bei Überschreitung des Grenzwerts in einem Lüftungsbetrieb einen konstanten zweiten Volumenstrom des ersten Abluftanteils einzustellen.

7. Anordnung nach Anspruch 6, **dadurch gekennzeichnet, dass**
- der erste Volumenstrom 30 bis 140 m³/h beträgt,
und/oder
- der zweite Volumenstrom 300 bis 600 m³/h beträgt,

8. Anordnung nach einem der Ansprüche 5 bis 7, **dadurch gekennzeichnet, dass**
- die Klimatisierungseinrichtung (105) wenigstens eine durch die Steuereinrichtung (105.1) gesteuerte Lüftereinheit (106.1, 108) zur Förderung des Abluftanteils durch das wenigstens eine zweite Abteil (103.1, 103.2) aufweist, wobei
- die Lüftereinheit (106.1, 108) dazu ausgebildet ist, zur Variation des Volumenstromes des ersten Abluftanteils ihre Drehzahl zu ändern,
und/oder
- die Lüftereinheit (108) in einer Förderrichtung nach dem wenigstens einen zweiten Abteil (103.1, 103.2) in einem Dachbereich des Schienenfahrzeugs, angeordnet ist,
und/oder
- die Lüftereinheit (108) nach Art eines Fortlüfters zur Abfuhr des Abluftanteils als Fortluft an die Umgebung des Schienenfahrzeugs ausgebildet ist.

9. Anordnung nach einem der vorhergehenden Ansprüche, **dadurch gekennzeichnet, dass**
- ein weiteres zweites Abteil (103.1, 103.2) vorgesehen ist und
- die Klimatisierungseinrichtung (105) zur Klimatisierung des weiteren zweiten Abteils (103.1, 103.2) ausgebildet ist, wobei
- die Klimatisierungseinrichtung (105) dazu ausgebildet ist, einen ersten Teil des Abluftanteils durch das wenigstens eine zweite Abteil (103.1, 103.2) zu führen und einen zweiten Teil des Abluftanteils durch das weitere zweite Abteil (103.1, 103.2) zu führen, wobei
- die Klimatisierungseinrichtung (105) insbesondere wenigstens eine Lüftereinheit (106.1, 108) zur Förderung des Abluftanteils aufweist, die in einer Förderrichtung nach den zweiten Abteilen (103.1, 103.2) angeordnet und mit den zweiten Abteilen (103.1, 103.2) über jeweils eine zweite Luftführung (107) verbunden ist.

10. Anordnung nach einem der vorhergehenden Ansprüche, **dadurch gekennzeichnet, dass**
- das wenigstens eine zweite Abteil (103.1, 103.2) dem ersten Abteil (102) unmittelbar benachbart angeordnet ist, wobei
- das wenigstens eine zweite Abteil (103.1, 103.2) innerhalb des ersten Abteils (102) angeordnet ist.

11. Schienenfahrzeug mit einer Anordnung (101.1) nach einem der vorangehenden Ansprüche.

12. Verfahren zur Kühlung von elektrischen Komponenten in einem Schienenfahrzeug mit einem ersten Abteil (102), wenigstens einem zweiten als Schaltschrank gebildeten Abteil (103.1, 103.2) zur Aufnahme der zu kühlenden elektrischen Komponenten (104.1, 104.2), bei dem
- das erste Abteil (102) und das zweite Abteil (103.1, 103.2) klimatisiert werden, wobei
- aus dem ersten Abteil (102) Abluft abgeführt wird und zumindest ein Teil der Abluft als Fortluft an die Umgebung des Schienenfahrzeugs abgeführt wird, wobei
- zumindest ein Abluftanteil der Abluft zur Klimatisierung des wenigstens einen zweiten Abteils (103.1, 103.2) durch das wenigstens eine zweite Abteil (103.1, 103.2) geführt wird und als Fortluft an die Umgebung des Schienenfahrzeugs abgeführt wird, wobei
- das erste Abteil (102) über eine erste Klimatisierungseinheit (106) der Klimatisierungseinrichtung (105) klimatisiert wird
**dadurch gekennzeichnet, dass**
- der Abluftanteil durch das wenigstens eine zweite Abteil (103.1,103.2) von einer ersten Lüftereinheit (106.1) der ersten Klimatisierungseinheit (106) gefördert wird,
- das wenigstens eine zweite Abteil (103.1,103.2) durch eine zweite Klimatisierungseinheit (108) der Klimatisierungseinrichtung (105) klimatisiert wird, wobei der Abluftanteil durch das wenigstens eine zweite Abteil (103.1,103.2) von einer zweiten Lüftereinheit (108) der zweiten Klimatisierungseinheit gefördert wird,
- die zweite Lüftereinheit (108) in einem Notbetrieb bei Ausfall der ersten Lüftereinheit (106.1) den gesamten Volumenstrom zur Klimatisierung des ersten Abteils (102) und des wenigstens einen zweiten Abteils (103.1,103.2) erzeugt.

13. Verfahren nach Anspruch 12, **dadurch gekennzeichnet, dass**
- eine erste Messgröße erfasst wird, die für eine im Bereich der elektrischen Komponenten (104.1, 104.2) in dem zweiten Abteil (103.1, 103.2) vorherrschende Temperatur repräsentativ ist, und
- ein Volumenstrom des ersten Abluftanteils in Abhängigkeit von dem aktuellen Wert der ersten Messgröße variiert wird, wobei.
- der aktuelle Wert der ersten Messgröße insbesondere mit einem Grenzwert verglichen wird und der Volumenstrom des ersten Abluftanteils bei Überschreitung des Grenzwerts erhöht wird,
- bei Unterschreitung des Grenzwerts in einem Grundlastbetrieb ein konstanter erster Volumenstrom des ersten Abluftanteils eingestellt wird und bei Überschreitung des Grenzwerts in einem Lüftungsbetrieb ein konstanter zweiter Volumenstrom des ersten Abluftanteils eingestellt wird.

14. Verfahren nach Anspruch 13, **dadurch gekennzeichnet, dass**
- der erste Volumenstrom 30 bis 140 m³/h beträgt,
und/oder
- der zweite Volumenstrom 300 bis 600 m³/h beträgt.

## Claims

1. An arrangement for cooling electrical components in a rail vehicle, with
- a first compartment (102),
- at least one second compartment (103.1, 103.2) that is realized in the form of a switchgear cabinet and serves for accommodating electrical components (104.1, 104.2) to be cooled, and
- an air-conditioning device (105), wherein
- the air-conditioning device (105) is designed for air-conditioning the first compartment (102) and the second compartment (103.1, 103.2), wherein
- the air-conditioning device (105) is designed for removing exhaust air from the first compartment (102) and for discharging at least part of the exhaust air into the surroundings of the rail vehicle in the form of outgoing air, wherein
- the air-conditioning device (105) is designed for conveying at least a portion of the exhaust air through the at least one second compartment (103.1, 103.2) in order to cool the at least one second compartment (103.1, 103.2) and for discharging this exhaust air portion into the surroundings of the rail vehicle in the form of outgoing air, wherein
- the air-conditioning device (105) features a first air-conditioning unit (106) for air-conditioning the first compartment (102),
**characterized in that**
- the first air-conditioning unit (106) features a first fan unit (106.1) for conveying the exhaust air portion through the at least one second compartment (103.1, 103.2) and
- the air-conditioning device (105) features a second air-conditioning unit (108) for air-conditioning the at least one second compartment (103.1, 103.2), wherein
- the second air-conditioning unit features a second fan unit (108) for conveying the exhaust air portion through the at least one second compartment (103.1, 103.2),
- the second fan unit (108) is designed for generating the entire volume flow for air-conditioning the first compartment (102) and the at least one second compartment (103.1, 103.2) in an emergency mode when the first fan unit (106.1) fails.

2. The arrangement according to Claim 1, **characterized in that**
- the second fan unit (108) is arranged downstream of the at least one second compartment (103.1, 103.2) referred to a conveying direction, wherein
- the second fan unit (108) is realized in the form of an exhaust fan for discharging the exhaust air portion into the surroundings of the rail vehicle in the form of outgoing air.

3. The arrangement according to one of the preceding claims, **characterized in that**
- the air-conditioning device (105) features at least one first air conduit (103.3, 103.4) for conveying the exhaust air portion into the at least one second compartment (103.1, 103.2), wherein
- the first air conduit comprises an air inlet (103.3, 103.4) in a wall of the at least one second compartment (103.1, 103.2).

4. The arrangement according to Claim 3, **characterized in that**
- the first air conduit comprises a filter device (103.5, 103.6) for filtering the exhaust air portion, wherein
- the filter device (103.5, 103.6) is arranged in the region of the air inlet (103.3, 103.4).

5. The arrangement according to one of the preceding claims, **characterized in that**
- the air-conditioning device (105) features a control device (105.1) and a sensor device (105.3, 105.4) that is connected to the control device (105.1), wherein
- the sensor device (105.3, 105.4) determines a first measurand that is representative of a temperature prevailing in the region of the electrical components (104.1, 104.2) in the second compartment (103.1, 103.2),
- the sensor device (105.3, 105.4) forwards a current value of the first measurand to the control device (105.1), and
- the air-conditioning device (105) is designed for varying a volume flow of the first exhaust air portion in dependence on the current value of the first measurand under the control of the control device (105.1).

6. The arrangement according to Claim 5, **characterized in that**
- the control device (105.1) is designed for comparing the current value of the first measurand with a limiting value and
- the air-conditioning device (105) is designed for increasing the volume flow of the first exhaust air portion under the control of the control device (105.1) when the limiting value is exceeded, wherein
- the air-conditioning device (105) is designed for adjusting a constant first volume flow of the first exhaust air portion in a normal load mode when the limiting value is not reached and for adjusting a constant second volume flow of the first exhaust air portion in a ventilation mode when the limiting value is exceeded.

7. The arrangement according to Claim 6, **characterized in that**
- the first volume flow amounts to 30 to 140 m³/h
and/or
- the second volume flow amounts to 300 to 600 m³/h.

8. The arrangement according to one of Claims 5 to 7, **characterized in that**
- the air-conditioning device (105) features at least one fan unit (106.1, 108) that is controlled by the control device (105.1) and serves for conveying the exhaust air portion through the at least one second compartment (103.1, 103.2), wherein
- the fan unit (106.1, 108) is designed for changing its rotational speed in order to vary the volume flow of the first exhaust air portion
and/or
- the fan unit (108) is arranged in a roof region of the rail vehicle downstream of the at least one second compartment (103.1, 103.2) referred to a conveying direction
and/or
- the fan unit (108) is realized in the form of an exhaust fan for discharging the exhaust air portion into the surroundings of the rail vehicle in the form of outgoing air.

9. The arrangement according to one of the preceding claims, **characterized in that**
- an additional second compartment (103.1, 103.2) is provided and
- the air-conditioning device (105) is designed for air-conditioning the additional second compartment (103.1, 103.2), wherein
- the air-conditioning device (105) is designed for conveying a first part of the exhaust air portion through the at least one second compartment (103.1, 103.2) and a second part of the exhaust air portion through the additional second compartment (103.1, 103.2), wherein
- the air-conditioning device (105) particularly features at least one fan unit (106.1, 108) for conveying the exhaust air portion, which is arranged downstream of the second compartments (103.1, 103.2) referred to a conveying direction and respectively connected to the second compartments (103.1, 103.2) via a second air conduit (107).

10. The arrangement according to one of the preceding claims, **characterized in that**
- the at least one second compartment (103.1, 103.2) is arranged directly adjacent to the first compartment (102), wherein
- the at least one second compartment (103.1, 103.2) is arranged within the first compartment (102).

11. A rail vehicle with an arrangement (101.1) according to one of the preceding claims.

12. A method for cooling electrical components in a rail vehicle with a first compartment (102) and at least one second compartment (103.1, 103.2) that is realized in the form of a switchgear cabinet and serves for accommodating the electrical components (104.1, 104.2) to be cooled, wherein
- the first compartment (102) and the second compartment (103.1, 103.2) are air-conditioned, wherein
- exhaust air is removed from the first compartment (102) and at least part of the exhaust air is discharged into the surroundings of the rail vehicle in the form of outgoing air, wherein
- at least one portion of the exhaust air is conveyed through the at least one second compartment (103.1, 103.2) in order to air-condition the at least one second compartment (103.1, 103.2) and discharged into the surroundings of the rail vehicle in the form of outgoing air, wherein
- the first compartment (102) is air-conditioned by means of a first air-conditioning unit (106) of the air-conditioning device (105),
**characterized in that**
- the exhaust air portion is conveyed through the at least one second compartment (103.1, 103.2) by a first fan unit (106.1) of the first air-conditioning unit (106),
- the at least one second compartment (103.1, 103.2) is air-conditioned by means of a second air-conditioning unit (108) of the air-conditioning device (105), wherein the exhaust air portion is conveyed through the at least one second compartment (103.1, 103.2) by a second fan unit (108) of the second air-conditioning unit,
- the second fan unit (108) generates the entire volume flow for air-conditioning the first compartment (102) and the at least one second compartment (103.1, 103.2) in an emergency mode when the first fan unit (106.1) fails.

13. The method according to Claim 12, **characterized in that**
- a first measurand is determined that is representative of a temperature prevailing in the region of the electrical components (104.1, 104.2) in the second compartment (103.1, 103.2), and
- a volume flow of the first exhaust air portion is varied in dependence on the current value of the first measurand, wherein
- particularly the current value of the first measurand is compared with a limiting value and the volume flow of the first exhaust air portion is increased when the limiting value is exceeded,
- a constant first volume flow of the first exhaust air portion is adjusted in a normal load mode when the limiting value is not reached and a constant second volume flow of the first exhaust air portion is adjusted in a ventilation mode when the limiting value is exceeded.

14. The method according to Claim 13, **characterized in that**
- the first volume flow amounts to 30 to 140 m³/h
and/or
- the second volume flow amounts to 300 to 600 m³/h.

## Revendications

1. Dispositif de refroidissement de composants électriques dans un véhicule ferroviaire, comportant :
- un premier compartiment (102),
- au moins un second compartiment (103.1, 103.2) se présentant sous forme d'une armoire de commande et destiné à recevoir des composants électriques à refroidir (104.1, 104.2) et
- un dispositif de climatisation (105), dans lequel
- le dispositif de climatisation (105) est conçu pour climatiser le premier compartiment (102) et le second compartiment (103.1, 103.2), dans lequel
- le dispositif de climatisation (105) est conçu pour évacuer de l'air d'échappement du premier compartiment (102) et évacuer au moins une partie de l'air d'échappement sous forme d'air continu vers l'environnement du véhicule ferroviaire, dans lequel
- le dispositif de climatisation (105) est conçu pour conduire au moins une partie de l'air d'échappement pour refroidir l'au moins un second compartiment (103.1, 103.2) au travers de l'au moins un second compartiment (103.1, 103.2) et l'évacuer sous forme d'air continu vers l'environnement du véhicule ferroviaire, dans lequel
- le dispositif de climatisation (105) présente une première unité de climatisation (106) pour climatiser le premier compartiment (102),
**caractérisé en ce que**
- la première unité de climatisation (106) présente une première unité à ventilateur (106.1) pour charrier la partie d'air d'échappement au travers de l'au moins un second compartiment (103.1, 103.2) et
- le dispositif de climatisation (105) présente une seconde unité de climatisation (108) pour climatiser l'au moins un second compartiment (103.1, 103.2) et dans lequel
- la seconde unité de climatisation présente une seconde unité à ventilateur (108) pour charrier la partie d'air d'échappement au travers de l'au moins un second compartiment (103.1, 103.2),
- la seconde unité de climatisation (108) est conçue pour, en cas d'urgence et de défaillance de la première unité à ventilateur (106.1), générer l'ensemble du débit volumique pour la climatisation du premier compartiment (102) et de l'au moins un second compartiment (103.1, 103.2).

2. Dispositif selon la revendication 1, **caractérisé en ce que**
- la seconde unité de ventilateur (108) est disposée dans un sens de transport en aval de l'au moins un second compartiment (103.1, 103.2), dans lequel
- la seconde unité de ventilateur (108) est conçue à la manière d'un ventilateur continu pour évacuer la partie d'air d'échappement vers l'environnement du véhicule ferroviaire.

3. Dispositif selon une des revendications précédentes, **caractérisé en ce que**
- le dispositif de climatisation (105) présente au moins un premier guide d'air (103.3, 103.4) pour guider la partie d'air d'échappement dans l'au moins un second compartiment (103.1, 103.2), dans lequel
- le premier guide d'air comprend une entrée d'air (103.3, 103.4) dans une paroi de l'au moins un second compartiment (103.1, 103.2).

4. Dispositif selon la revendication 3, **caractérisé en ce que**
- le premier guide d'air comprend un dispositif de filtration (103.5, 103.6) pour filtrer la partie d'air d'échappement, dans lequel
- le dispositif de filtration (103.5, 103.6) est disposé au niveau de l'entrée d'air (103.3, 103.4).

5. Dispositif selon une des revendications précédentes, **caractérisé en ce que**
- le dispositif de climatisation (105) présente un dispositif de commande (105.1) et un dispositif de détection (105.3, 105.4) relié au dispositif de commande (105.1), dans lequel
- le dispositif de détection (105.3, 105.4) détecte une première grandeur de mesure qui est représentative d'une température préexistante au niveau des composants électriques (104.1, 104.2) dans le second compartiment (103.1, 103.2),
- le dispositif de détection (105.3, 105.4) retransmet une valeur actuelle de la première grandeur de mesure au dispositif de commande (105.1) et
- le dispositif de climatisation (105) est conçu pour varier un débit volumique de la première partie d'air d'échappement commandée par le dispositif de commande (105.1) en fonction de la valeur actuelle de la première grandeur de mesure.

6. Dispositif selon la revendication 5, **caractérisé en ce que**
- le dispositif de commande (105.1) est conçu pour comparer la valeur actuelle de la première grandeur de mesure à une valeur limite et
- le dispositif de climatisation (105) est conçu pour augmenter le débit volumique de la première partie d'air d'échappement sous le contrôle du dispositif de commande (105.1) en cas de dépassement de la valeur limite, dans lequel
- le dispositif de climatisation (105) est conçu pour, en cas de non-atteinte de la valeur limite, établir un premier débit volumique constant de la première partie d'air d'échappement en mode charge de base et, en cas de dépassement de la valeur limite, établir un second débit volumique constant de la première partie d'air d'échappement en mode ventilation.

7. Dispositif selon la revendication 6, **caractérisé en ce que**
- le premier débit volumique est de 30 à 140 m³/h
et/ou
- le second débit volumique est de 300 à 600 m³/h.

8. Dispositif selon une des revendications 5 à 7, **caractérisé en ce que**
- le dispositif de climatisation (105) présente au moins une unité à ventilateur (106.1, 108) commandée par le dispositif de commande (105.1) pour charrier la partie d'air d'échappement au travers de l'au moins un second compartiment (103.1, 103.2), dans lequel
- l'unité à ventilateur (106.1, 108) est conçue pour changer sa vitesse de rotation afin de varier le débit volumique de la première partie d'air d'échappement,
et/ou
- l'unité à ventilateur (108) est disposée dans une partie toit du véhicule ferroviaire dans un sens de transport en aval de l'au moins un second compartiment (103.1, 103.2)
et/ou
- l'unité à ventilateur (108) est conçue à la manière d'un ventilateur continu pour évacuer la partie d'air d'échappement en tant qu'air continu vers l'environnement du véhicule ferroviaire.

9. Dispositif selon une des revendications précédentes, **caractérisé en ce**
- **qu'**il est prévu un autre second compartiment (103.1, 103.2) et que
- le dispositif de climatisation (105) est conçu pour climatiser l'autre second compartiment (103.1, 103.2), dans lequel
- le dispositif de climatisation (105) est conçu pour conduire une première partie de la partie d'air d'échappement au travers de l'au moins un second compartiment (103.1, 103.2) et une seconde partie de la partie d'air d'échappement au travers de l'autre second compartiment (103.1, 103.2), dans lequel
- le dispositif de climatisation (105) présente en particulier au moins une unité à ventilateur (106.1, 108) pour charrier la partie d'air d'échappement et qui est disposée dans un sens de transport en aval des seconds compartiments (103.1, 103.2) et est reliée aux seconds compartiments (103.1, 103.2) respectivement par un second guide d'air (107).

10. Dispositif selon une des revendications précédentes, **caractérisé en ce que**
- l'au moins un second compartiment (103.1, 103.2) est disposé directement à proximité du premier compartiment (102), dans lequel
- l'au moins un second compartiment (103.1, 103.2) est disposé dans le premier compartiment (102).

11. Véhicule ferroviaire comportant un dispositif (101.1) selon une des revendications précédentes.

12. Procédé de refroidissement de composants électriques dans un véhicule ferroviaire, comportant un premier compartiment (102), au moins un second compartiment (103.1, 103.2) se présentant sous forme d'une armoire de commande et destiné à recevoir les composants électriques à refroidir (104.1, 104.2), dans lequel
- le premier compartiment (102) et le second compartiment (103.1, 103.2) sont climatisés, dans lequel
- de l'air d'échappement est évacué du premier compartiment (102) et une partie de l'air d'échappement est évacuée sous forme d'air continu vers l'environnement du véhicule ferroviaire, dans lequel
- au moins une partie de l'air d'échappement, pour climatiser l'au moins un second compartiment (103.1, 103.2), est conduite au travers de l'au moins un second compartiment (103.1, 103.2) et évacuée sous forme d'air continu vers l'environnement du véhicule ferroviaire, dans lequel
- le premier compartiment (102) est climatisé par une première unité de climatisation (106) du dispositif de climatisation (105),
**caractérisé en ce que**
- la partie d'air d'échappement est charriée au travers de l'au moins un second compartiment (103.1, 103.2) par une première unité à ventilateur (106.1) de la première unité de climatisation (106),
- l'au moins un second compartiment (103.1, 103.2) est climatisé par une seconde unité de climatisation (108) du dispositif de climatisation (105), la partie d'air d'échappement étant charriée au travers de l'au moins un second compartiment (103.1, 103.2) par une seconde unité à ventilateur (108) de la seconde unité de climatisation,
- la seconde unité à ventilateur (108) génère, en cas d'urgence et de défaillance de la première unité à ventilateur (106.1), l'ensemble du débit volumique pour la climatisation du premier compartiment (102) et de l'au moins un second compartiment (103.1, 103.2).

13. Procédé selon la revendication 12, **caractérisé en ce**
- **qu'**une première grandeur de mesure est détectée qui est représentative d'une température préexistante au niveau des composants électriques (104.1, 104.2) dans le second compartiment (103.1, 103.2), et
- **qu'**un débit volumique de la première partie d'air d'échappement est varié en fonction de la valeur actuelle de la première grandeur de mesure, dans lequel
- en particulier, la valeur actuelle de la première grandeur de mesure est comparée à une valeur limite et le débit volumique de la première partie d'air d'échappement étant augmenté en cas de dépassement de la valeur limite,
- en cas de non-atteinte de la valeur limite, un premier débit volumique constant de la première partie d'air d'échappement étant établi en mode charge de base et, en cas de dépassement de la valeur limite, un second débit volumique constant de la première partie d'air d'échappement étant établi en mode ventilation.

14. Procédé selon la revendication 13, **caractérisé en ce que**
- le premier débit volumique est de 30 à 140 m³/h
et/ou
- le second débit volumique est de 300 à 600 m³/h.
